# EUROPÄISCHE PATENTSCHRIFT

(11) **EP 1 443 176 B1**
(45) Veröffentlichungstag und Bekanntmachung des Hinweises auf die Patenterteilung: **24.10.2012**
(21) Anmeldenummer: 04100371.6
(22) Anmeldetag: 03.02.2004
(51) Int. Cl.: E21B 44/00, B23B 39/08, B28D 7/00, B28D 1/04

(54) **Vorschubgeregelte Kernbohrmaschine**
Core drilling machine with controlled feed
Machine de carottage à dispositif d'avance contrôlé

(30) Priorität: 01.02.2003 DE 10304405
(43) Veröffentlichungstag der Anmeldung: 04.08.2004
(73) Patentinhaber: HILTI Aktiengesellschaft, 9494 Schaan (LI)
(72) Erfinder: Koslowski, Oliver, 86919, Utting am Ammersee (DE); Lieb, Konrad, 86899, Landsberg (DE)
(74) Vertreter: Wildi, Roland

(56) Entgegenhaltungen:
- EP-A- 0 466 255
- DE-A- 19 807 899
- GB-A- 2 179 525
- US-A- 3 898 880
- US-A- 6 029 754

## Beschreibung

Die Erfindung bezeichnet ein Verfahren zur Regelung einer Kernbohrmaschine sowie eine entsprechende vorschubgeregelte Kembohrmaschine zur Durchführung des Verfahrens, insbesondere eine ständergeführte Diamantkernbohrmaschine für armierten Beton.

Beim Kernbohren von Gestein dringen ultraharte Schneiden oder Diamanten der Kembohrkrone geringfügig in den Untergrund ein und tragen ihn abrasiv ab. Die dazu untergrundspezifisch notwendigen hohen Drehmomente und Vorschubkräfte werden üblicherweise gegen einen Maschinenständer aufgebracht, der fest mit dem Untergrund verbunden ist. Erfolgt die Steuerung des Vorschubs üblicherweise über ein Hebelrad manuell durch den Nutzer, ist eine untergrundspezifisch optimale Eindringtiefe der Schneiden nicht gewährleistet, wodurch es neben einer verringerten Bohrleistung insbesondere zu einem vorzeitigen Verschleiss der Schneiden kommt.

Nach der DE19807899 ist eine adaptive Vorschubregelung für eine ständergeführte Diamantkembohrmaschine bekannt, welche über einen PID-Regler in Abhängigkeit der Stromaufnahme des Elektromotors bzw. des damit im Wesentlichen eineindeutigen Drehmoments den Vorschub regelt. Bei einer derartigen leistungsbasierten Regelung steht folglich nur ein maximales Drehmoment bei einer, durch die Getriebeuntersetzung vorgegebenen, konstanten Drehzahl zur Verfügung. Änderungen des Untergrunds, insbesondere Armierungseisentreffer, führen somit notwendig zu nichtoptimalen Drehmoment / Drehzahl - Paarungen.

Zudem weist nach der US4618805 eine Bohrmaschine einen Elektromotor mit einer Motorsteuerung auf, welche auf der Motorkennlinie maximaler Leistung für verschiedene Arbeitspunkte unabhängig voneinander voreinstellbar und zwischen diesen Arbeitspunkten elektronisch umschaltbar ist.

US6029754 offenbart ein Verfahren zur Regelung einer Kernbohrmaschine mit einem Motor zum drehenden Antrieb einer Kernbohrkrone, einem Vorschubmittel zur Erzeugung des Vorschubs der Kernbohrkrone gegen ein Werkstück und einem Regler. Ein von der Leistung des Motors abhängiger erster Regelparameter wird mit einem ersten Sensor erfasst und ein von der Anpresskraft der Kernbohrkrone abhängiger zweiter Regelparameter wird mit einem Kraftsensor erfasst. Die Vorschubkraft und die Drehzahl bzw. das Drehmoment werden an die Bodenhärte angepasst, so dass beim Bohren eine maximale Vorschubgeschwindigkeit erzielt wird. Eine Anpassung der Drehmoment / Drehzahl - Paarungen an den Reibungskoeffizienten des Untergrundes erfolgt nicht.

Die Aufgabe der Erfindung besteht in der Realisierung einer vorschubgeregelten Kernbohrmaschine und eines zugeordnetes Regelverfahrens, welches ohne Unterbrechung des Bohrprozesses auf Änderungen des Untergrunds durch jeweils optimale Drehmoment /Drehzahl - Paarungen reagiert.

Die Aufgabe wird im Wesentlichen durch die Merkmale der unabhängigen Ansprüche gelöst. Vorteilhafte Weiterbildungen ergeben sich aus den Unteransprüchen.

Bei dem Verfahren zur Regelung einer Kernbohrmaschine mit einem Elektromotor zum drehenden Antrieb einer Kernbohrkrone wird im Wesentlichen in einem ersten Schritt ein von der Leistung des Elektromotors abhängiger erster Regelparameter mit einem Sensor erfasst, dieser Regelparameter in einem zweiten Schritt von einem Regler ausgewertet und in einem dritten Schritt vom Regler ein Vorschubmittel für die Kernbohrkrone gesteuert, wobei im ersten Schritt zusätzlich ein von der Anpresskraft abhängiger zweiter Regelparameter mit einem Kraftsensor erfasst wird. Erfindungsgemäß ist vorgesehen, dass im zweiten Schritt vom Regler aus dem ersten und dem zweiten Regelparameter ein zum Reibungskoeffizienten eineindeutiger Regelparameter ermittelt und dieser im dritten Schritt zur Steuerung des Vorschubmittels verwendet wird.

Vorteilhaft wird im dritten Schritt zusätzlich eine Motorsteuerung des Elektromotors mit dem Regelparameter gesteuert, weiter vorteilhaft bezüglich zumindest zwei verschiedenen Arbeitspunkten, welche auf der Motorkennlinie maximaler Leistung liegen.

Im Wesentlichen weist eine entsprechende Kernbohrmaschine zur Durchführung des Verfahren zur Regelung einen Elektromotor zum drehenden Antrieb einer Kernbohrkrone mit axial zu einem Werkstück orientierten Schneiden, ein Vorschubmittel zu Erzeugung des Vorschubs der Kernbohrkrone gegen das Werkstück und einen Regler zur Regelung entsprechend eines mit einem Sensor erfassten ersten, zur elektrischen Leistungsaufnahme bzw. dem Drehmoment eineindeutigen, Regelparameters auf, wobei zusätzlich ein Kraftsensor zur Erfassung der Anpresskraft der Kernbohrkrone als zweiten Regelparameter mit dem Regler verbunden ist und der Regler aus dem ersten und dem zweiten Regelparameter einen zum Reibungskoeffizienten (µ) eineindeutigen Regelparameter ermittelt und diesen eineindeutigen Regelparameter zur Steuerung des Vorschubmittels (6) verwendet.

Mit der zusätzlichen Erfassung der, vorteilhaft über die Stromaufnahme des Vorschubmotors ermittelten, Anpresskraft als zweitem Regelparameter lässt sich in Kombination mit dem der Leistungsaufnahme bzw. dem Drehmoment eineindeutigen ersten Regelparameter ein untergrundspezifischer Reibungskoeffizient, welcher die mikrophysikalische Abrasion der Schneiden unmittelbar beschreibt, ermitteln und dieser als Regelparameter für die Regelung des Vorschubs der Kernbohrkrone verwenden.

Es lässt sich zeigen, dass der untergrundspezifische Reibungskoeffizient allgemein aus einer gemessenen Leistungsaufnahme bzw. dem abgegebenen Drehmoment und einer Normalkraft berechnet werden kann.

Vorteilhaft ist der Kraftsensor als Piezokraftsensor ausgebildet und weiter vorteilhaft in einem Axiallagerbereich der Antriebswelle angeordnet, wodurch die Normalkraft unmittelbar in der Kernbohrmaschine messbar ist.

Alternativ vorteilhaft ist der Kraftsensor als Leistungssensor (bspw. Stromsensor oder Drehmomentsensor) des Vorschubmittels bspw. Vorschubmotors ausgebildet, wodurch die Normalkraft mittelbar im Vorschubmittel messbar ist.

Vorteilhaft ist der Regler als Mikrocontroller ausgebildet, wodurch der als Regelparameter benutzte Reibungskoeffizient numerisch und somit driftfrei berechenbar ist.

Vorteilhaft ist der Regler mit einem Eingabemittel (bspw. einer Tastatur oder einem Wahlschalter) für den Radius der Bohrkrone verbunden, weiter vorteilhaft mit einem Transponder, welcher ein Identifikationsmittel an der Kernbohrkrone abfragt, wodurch die Regelung spezifisch für den realen Bohrkronendurchmesser erfolgt.

Vorteilhaft sind im Regler zu zumindest zwei verschiedenen Reibungskoeffizienten jeweils unterschiedliche Drehmomente bzw. Drehzahlen zugeordnet, wodurch der Vorschub der Kernbohrkrone in Abhängigkeit vom detektierten Untergrund geregelt und somit adaptiv an den jeweiligen Untergrund angepasst wird.

Vorteilhaft ist der Elektromotor mit einer, mit dem Regler im Vorschubmittel steuerbar verbundenen, Motorsteuerung verbunden, die zumindest zwei verschiedene Arbeitspunkte des Elektromotors, welche weiter vorteilhaft auf der Motorkennlinie maximaler Leistung liegen, elektronisch schalten kann, wodurch der Elektromotor mit der Motorsteuerung ein elektronisches Getriebe realisiert, welches vom Regler steuerbar ist. Insbesondere sind als Elektromotoren frequenzumrichtergespeiste Asynchronmaschinen mit großem Feldschwächebereich geeignet.

Vorteilhaft sind im Regler zu zumindest zwei verschiedenen Reibungskoeffizienten jeweils unterschiedliche Drehmoment / Drehzahl - Paarungen zugeordnet, wodurch in Abhängigkeit vom detektierten Untergrund der Arbeitspunkt der Kernbohrmaschine geregelt und somit adaptiv an den jeweiligen Untergrund angepasst wird.

Vorteilhaft ist der Regler im Vorschubmittel über eine bidirektionale optische Schnittstelle mit der Motorsteuerung zur Übertragung der Sensormesswerte und der optimalen Drehmoment /Drehzahl - Paarungen vom Regler verbunden, wodurch eine galvanische Trennung des mit dem Bohrständer mechanisch verbundenen Vorschubmittels vom üblicherweise wassergekühlten Elektromotor realisiert ist.

Die Erfindung wird bezüglich eines vorteilhaften Ausführungsbeispiels näher erläutert mit:
Fig. 1 als Kernbohrmaschine
Fig. 2 als Variante

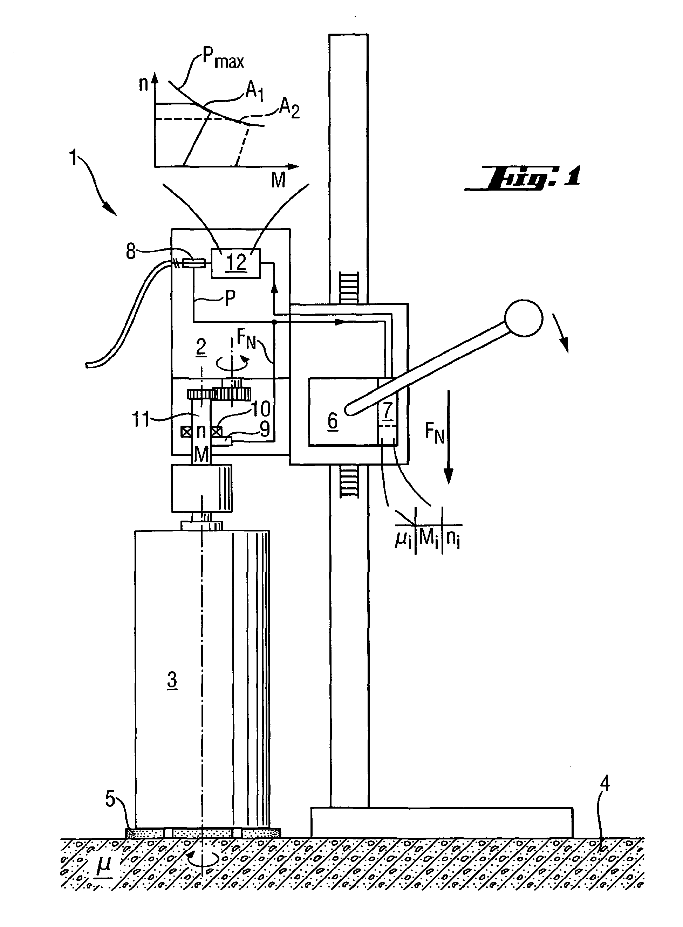

Nach Fig. 1 weist eine Kernbohrmaschine 1 einen Elektromotor 2 zum drehenden Antrieb einer Kernbohrkrone 3 mit axial zu einem Werkstück 4 orientierten, ultraharten Schneiden 5 und ein Vorschubmittel 6 mit einem Regler 7 zur Regelung des Vorschubs der Kernbohrkrone 3 gegen das Werkstück 4 auf. Die Regelung erfolgt abhängig von einem vom untergrundspezifischen Reibungskoeffizienten µ eineindeutigen Regelparameter, der vom Regler 7 aus einer mit einem Sensor 8 im Strompfad des Elektromotors 2 erfassten elektrischen Leistung P sowie aus einer mit einen Kraftsensor 9 erfassten Anpresskraft F_{N} der Kernbohrkrone 3 ermittelt wird: µ=P/(2π n r F_{N}) = M/(rF_{N}), mit µ: Reibungskoeffizient; P: Leistungsaufnahme; M: Drehmoment; F_{N} : Normalkraft; r: Radius der Bohrkrone. Der Kraftsensor 9 ist als Piezokraftsensor ausgebildet und in einem Axiallagerbereich 10 einer Antriebswelle 11 der Kernbohrmaschine 1 angeordnet. Im als Mikrocontroller ausgebildeten Regler 7 sind tabellarisch mehreren verschiedenen Reibungskoeffizienten µᵢ jeweils unterschiedliche Drehmomente Mᵢ bzw. Drehzahlen nᵢ zugeordnet. Der als frequenzumrichtergespeiste Asynchronmaschine mit großem Feldschwächebereich ausgebildete Elektromotor 2 ist mit einer, mit dem Regler 7 im Vorschubmittel 6 steuerbar verbunden, Motorsteuerung 12 verbunden, die mehrere verschiedene Arbeitspunkte Aᵢ des Elektromotors 2, welche auf der Motorkennlinie maximaler Leistung Pₘₐₓ liegen, elektronisch schalten kann. Im Regler 7 sind tabellarisch mehreren verschiedenen Reibungskoeffizienten µᵢ jeweils unterschiedliche Drehmoment / Drehzahl - Paarungen [M₁/n] zugeordnet.

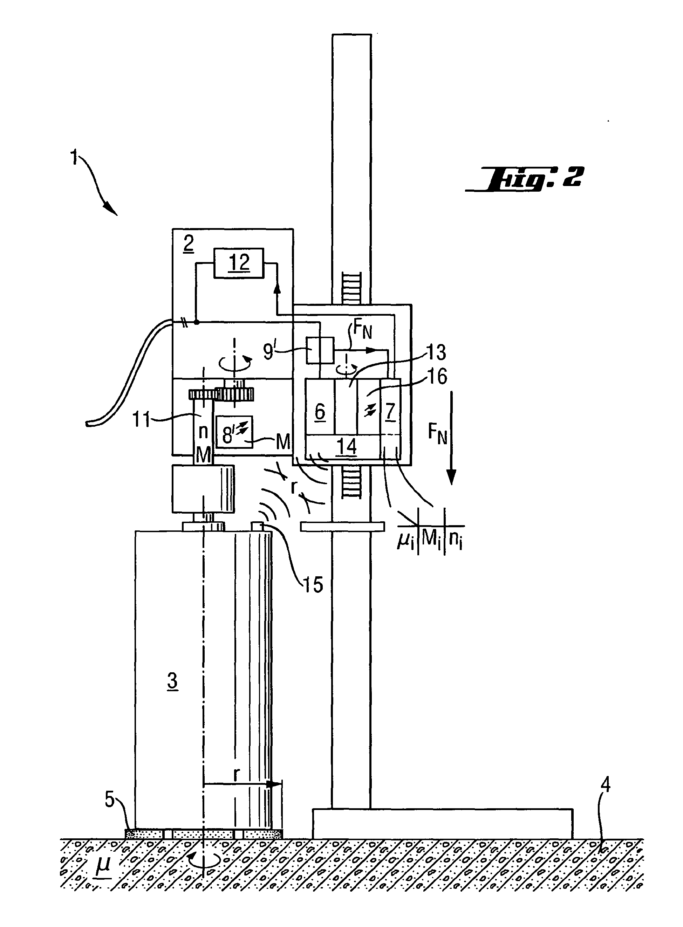

Nach Fig. 2 ist in einer Variante der Kraftsensor 9' als Leistungssensor des Vorschubmittels 6 ausgebildet und im Strompfad eines Vorschubmotors 13 angeordnet. Der Regler 7 ist mit einem Eingabemittel 14 in Form eines Transponders verbunden, welcher ein an der Kernbohrkrone 3 angeordnetes Identifikationsmittel 15 mit dem Radius r der Bohrkrone abfragt. Der Regler 7 ist zudem über eine bidirektionale optische Schnittstelle 16 mit einem das Drehmoment M der Antriebswelle 11 messenden Sensor 8' sowie mit der Motorsteuerung 12 zur Übertragung der optimalen Drehmoment / Drehzahl - Paarungen [M₁/n₁] verbunden.

## Patentansprüche

1. Verfahren zur Regelung einer Kernbohrmaschine (1) mit einem Elektromotor (2) zum drehenden Antrieb einer Kernbohrkrone (3), wobei in einem ersten Schritt ein von der Leistung (P) des Elektromotors (2) abhängiger erster Regelparameter mit einem Sensor (8, 8') erfasst wird, dieser Regelparameter in einem zweiten Schritt von einem Regler (7) ausgewertet wird und in einem dritten Schritt vom Regler (7) ein Vorschubmittel (6) für die Kernbohrkrone (3) gesteuert wird, wobei im ersten Schritt zusätzlich ein von der Anpresskraft (F_{N}) abhängiger zweiter Regelparameter mit einem Kraftsensor (9, 9') erfasst wird, **dadurch gekennzeichnet, dass** im zweiten Schritt vom Regler (7) aus dem ersten und dem zweiten Regelparameter ein zum Reibungskoeffizienten (µ) eineindeutiger Regelparameter ermittelt wird und dieser im dritten Schritt zur Steuerung des Vorschubmittels (6) verwendet wird.

2. Verfahren nach Anspruch 1, **dadurch gekennzeichnet, dass** im dritten Schritt zusätzlich eine Motorsteuerung (12) des Elektromotors (2) mit dem Regelparameter gesteuert wird.

3. Verfahren nach Anspruch 2, **dadurch gekennzeichnet, dass** die Motorsteuerung (12) des Elektromotors (2) bezüglich zumindest zwei verschiedenen Arbeitspunkten (A₁), welche auf der Motorkennlinie maximaler Leistung (Pₘₐₓ) liegen, gesteuert wird.

4. Kernbohrmaschine zur Durchführung eines Verfahrens zur Regelung nach einem der Ansprüche 1 bis 3 mit einem Elektromotor (2) zum drehenden Antrieb einer Kernbohrkrone (3) mit axial zu einem Werkstück (4) orientierten Schneiden (5), einem Vorschubmittel (6) zur Erzeugung des Vorschubs der Kernbohrkrone (3) gegen das Werkstück (4) und mit einem Regler (7) zur Regelung entsprechend eines mit einem Sensor (8, 8') erfassten, zur elektrischen Leistungsaufnahme (P) bzw. dem Drehmoment (M) eineindeutigen, ersten Regelparameters, wobei zusätzlich ein Kraftsensor (9, 9') zur Erfassung der Anpresskraft (F_{N}) der Kernbohrkrone (3) als zweiten Regelparameter mit dem Regler (7) verbunden ist und der Regler (7) aus dem ersten und dem zweiten Regelparameter einen zum Reibungskoeffizienten (µ) eineindeutigen Regelparameter ermittelt und diesen eineindeutigen Regelparameter zur Steuerung des Vorschubmittels (6) verwendet.

5. Kernbohrmaschine nach Anspruch 4, **dadurch gekennzeichnet, dass** der Kraftsensor (9) als Piezokraftsensor ausgebildet ist und optional in einem Axiallagerbereich (10) einer Antriebswelle (11) angeordnet ist.

6. Kernbohrmaschine nach Anspruch 5, **dadurch gekennzeichnet, dass** der Kraftsensor (9') als Leistungssensor des Vorschubmittels (6) ausgebildet ist.

7. Kernbohrmaschine nach einem der Ansprüche 4 bis 6, **dadurch gekennzeichnet, dass** der Regler (7) als Mikrocontroller ausgebildet ist.

8. Kernbohrmaschine nach einem der Ansprüche 4 bis 7, **dadurch gekennzeichnet, dass** der Regler (7) mit einem Eingabemittel (14) für den Radius (r) der Bohrkrone (3) verbunden ist, optional mit einem Transponder, welcher ein Identifikationsmittel (15) an der Kernbohrkrone (3) abfragt.

9. Kernbohrmaschine nach einem der Ansprüche 4 bis 8, **dadurch gekennzeichnet, dass** im Regler (7) zu zumindest zwei verschiedenen Reibungskoeffizienten (µᵢ) jeweils unterschiedliche Drehmomente M₁ bzw. Drehzahlen n₁ zugeordnet sind.

10. Kernbohrmaschine nach einem der Ansprüche 4 bis 9, **dadurch gekennzeichnet, dass** der Elektromotor (2) mit einer, mit dem Regler (7) im Vorschubmittel (6) steuerbar verbunden, Motorsteuerung (12) verbunden ist, die zumindest zwei verschiedene Arbeitspunkte (Aₗ) des Elektromotors (2), welche optional auf der Motorkennlinie maximaler Leistung (Pₘₐₓ) liegen, elektronisch schalten kann.

11. Kernbohrmaschine nach Anspruch 10, **dadurch gekennzeichnet, dass** im Regler (7) zu zumindest zwei verschiedenen Reibungskoeffizienten (µᵢ) jeweils unterschiedliche Drehmoment / Drehzahl - Paarungen ([Mᵢ / nᵢ]) zugeordnet sind.

12. Kernbohrmaschine nach Anspruch 10 oder 11, **dadurch gekennzeichnet, dass** der Regler (7) im Vorschubmittel (6) über eine bidirektionale optische Schnittstelle (16) mit der Motorsteuerung (12) verbunden ist.

## Claims

1. Method of controlling a core drilling machine (1) having an electric motor (2) to drive a core drill (3) in rotation, a first control parameter dependent on the power (P) consumed by the electric motor (2) being detected by a sensor (8, 8') in a first step, this control parameter being evaluated by a controller (7) in a second step, and a feeding means (6) for the core drill (3) being controlled by the controller (7) in a third step, a second control parameter dependent on the force of application (F_{N}) being sensed in addition in the first step by a force sensor (9, 9'), **characterised in that**, in the second step, a control parameter which bears a one-to-one relationship to the coefficient of friction (µ) is determined by the controller (7) from the first and second control parameters and in the third step this control parameter is used to control the feeding means (6).

2. Method according to claim 1, **characterised in that**, in the third step, a control system (12) for the electric motor (2) is controlled in addition by the control parameter.

3. Method according to claim 2, **characterised in that** the control system (12) for the electric motor (2) is controlled in relation to at least two different operating points (Aᵢ) which lie along the motor characteristic for maximum power (Pₘₐₓ).

4. Core drilling machine for carrying out a method of control according to one of claims 1 to 3, having an electric motor (2) to drive in rotation a core drill (3) which has cutting edges (5) oriented axially relative to a workpiece (4), having a feeding means (6) to produce the feed of the core drill (3) towards the workpiece (4), and having a controller (7) for control in accordance with a first control parameter which is sensed by a sensor (8, 8') and which bears a one-to-one relationship to the electrical power consumption (P) and the torque (M), a force sensor (9, 9') being connected to the controller (7) in addition to sense the force (F_{N}) with which the core drill (3) is applied as a second control parameter, and the controller (7) determining from the first and second control parameters a control parameter which bears a one-to-one relationship to the coefficient of friction (µ) and using this one-to-one parameter to control the feeding means (6).

5. Core drilling machine according to claim 4, **characterised in that** the force sensor (9) takes the form of a piezo-electric force sensor and, as an option, is arranged in the region of an axial bearing (10) carrying a drive shaft (11).

6. Core drilling machine according to claim 5, **characterised in that** the force sensor (9') takes the form of a sensor for the power consumed by the feeding means (6).

7. Core drilling machine according to one of claims 4 to 6, **characterised in that** the controller (7) takes the form of a micro-controller.

8. Core drilling machine according to one of claims 4 to 7, **characterised in that** the controller (7) is connected to an input means (14) for the radius (r) of the core drill (3) and, as an option, to a transponder which interrogates a means of identification (15) on the core drill (3).

9. Core drilling machine according to one of claims 4 to 8, **characterised in that** different torques Mᵢ and speeds of rotation nᵢ are assigned in the controller (7) to each of at least two different coefficients of friction (µ).

10. Core drilling machine according to one of claims 4 to 9, **characterised in that** the electric motor (2) is connected to a motor control system (12) which is controllably connected to the controller (7) in the feeding means (6) and which is able to switch electronically at least two different operating points (Aᵢ) for the electric motor (2) which, as an option, lie along the motor characteristic for maximum power (Pₘₐₓ).

11. Core drilling machine according g to claim 10, **characterised in that** different torque/speed of rotation pairings ([Mᵢ/nᵢ]) are assigned to at least two different coefficients of friction (µᵢ) in the controller (7).

12. Core drilling machine according to claim 10 or 11, **characterised in that** the controller (7) in the feeding means (6) is connected to the motor control system (12) by a bi-directional optical interface (16).

## Revendications

1. Procédé pour réguler une carotteuse (1) munie d'un moteur électrique (2) destiné à entraîner un trépan de carottage (3) en rotation, dans lequel pendant une première étape, un premier paramètre de régulation dépendant de la puissance (P) du moteur électrique (2) est détecté avec un capteur (8, 8'), ce paramètre de régulation est évalué par un régulateur (7) pendant une deuxième étape et, pendant une troisième étape, des moyens d'avance (6) pour le trépan de carottage (3) sont commandés par le régulateur (7), dans lequel au cours de la première étape, un second paramètre de régulation dépendant de la force de pression (F_{N}) est de plus détecté avec un capteur de force (9, 9'), **caractérisé en ce que** pendant la deuxième étape, un paramètre de régulation biunivoque par rapport au coefficient de frottement (µ) est déterminé par le régulateur (7) à partir des premier et second paramètres de régulation, et est utilisé pendant la troisième étape pour commander les moyens d'avance (6).

2. Procédé selon la revendication 1, **caractérisé en ce que** pendant la troisième étape, une commande de moteur (12) du moteur électrique (2) est de plus commandée en utilisant le paramètre de régulation.

3. Procédé selon la revendication 2, **caractérisé en ce que** la commande de moteur (12) du moteur électrique (2) est commandée par rapport à au moins deux différents points de fonctionnement (Aᵢ) situés sur la courbe caractéristique de moteur de la puissance maximale (Pₘₐₓ).

4. Carotteuse pour la mise en oeuvre d'un procédé de régulation selon l'une quelconque des revendications 1 à 3, comportant un moteur électrique (2) pour entraîner en rotation un trépan de carottage (3) muni d'un tranchant (5) orienté axialement par rapport à une pièce de travail (4), de moyens d'avance (6) pour faire avancer le trépan de carottage (3) contre la pièce de travail (4), et d'un régulateur (7) pour effectuer une régulation en fonction d'un premier paramètre de régulation, biunivoque par rapport à la puissance électrique absorbée (P) ou au couple (M), détecté à l'aide d'un capteur (8, 8'), dans laquelle un capteur de force (9, 9') est de plus relié au régulateur (7) pour détecter la force de pression (F_{N}) du trépan de carottage (3) en tant que second paramètre de régulation, et le régulateur (7) détermine à partir des premier et second paramètres de régulation, un paramètre de régulation biunivoque par rapport au coefficient de frottement (µ) et utilise ce paramètre de régulation biunivoque pour commander les moyens d'avance (6).

5. Carotteuse selon la revendication 4, **caractérisée en ce que** le capteur de force (9) est formé comme un capteur de force piézoélectrique et est facultativement agencé dans une zone de palier axial (10) d'un arbre d'entraînement (11).

6. Carotteuse selon la revendication 5, **caractérisée en ce que** le capteur de force (9') est formé comme un capteur de puissance des moyens d'avance (6).

7. Carotteuse selon l'une quelconque des revendications 4 à 6, **caractérisée en ce que** le régulateur (7) est formé comme un microcontrôleur.

8. Carotteuse selon l'une quelconque des revendications 4 à 7, **caractérisée en ce que** le régulateur (7) est relié à des moyens d'entrée (14) pour le rayon (r) du trépan de carottage (3), facultativement avec un transpondeur qui interroge des moyens d'identification (15) sur le trépan de carottage (3).

9. Carotteuse selon l'une quelconque des revendications 4 à 8, **caractérisée en ce que** dans le régulateur (7), au moins deux différents coefficients de frottement (µᵢ) sont respectivement attribués à différents couples Mᵢ ou vitesses de rotation nᵢ.

10. Carotteuse selon l'une quelconque des revendications 4 à 9, **caractérisée en ce que** le moteur électrique (2) est relié à une commande de moteur (12) pouvant être commandée avec le régulateur (7) dans les moyens d'avance (6), laquelle commande de moteur peut électroniquement commuter au moins deux différents points de fonctionnement (Aᵢ) du moteur électrique (2) qui peuvent facultativement se situer sur la courbe caractéristique de moteur de la puissance maximale (Pₘₐₓ).

11. Carotteuse selon la revendication 10, **caractérisée en ce que** dans le régulateur (7), au moins deux différents coefficients de frottement (µᵢ) sont respectivement attribués à différentes paires de couple/vitesse de rotation ([Mᵢ/nᵢ]).

12. Carotteuse selon la revendication 10 ou 11, **caractérisée en ce que** le régulateur (7) dans les moyens d'avance (6) est relié à la commande de moteur (12) par l'intermédiaire d'au moins une interface optique bidirectionnelle (16).
